# EUROPEAN PATENT APPLICATION

(11) **EP 4 693 862 A2**
(43) Date of publication of application: **11.02.2026**
(21) Application number: 24789033.8
(22) Date of filing: 11.04.2024
(51) Int. Cl.: H02M 3/00, H02M 3/158, H02M 1/00, H02M 1/14, B60L 53/22

(54) **RESONANT CONVERTER AND ELECTRIC VEHICLE CHARGER COMPRISING SAME**

(30) Priority: 14.04.2023 KR 20230049410; 04.08.2023 KR 20230102232
(71) Applicant: SOLUM CO., LTD., Gyeonggi-do 16914 (KR); Konkuk University Industrial Cooperation Corp, Seoul 05029 (KR)
(72) Inventor: JI, Sang Keun, Yongin-si, Gyeonggi-do 16953 (KR); KIM, Jong Woo, Seoul 02455 (KR); CHO, Young Hoon, Seongnam-si, Gyeonggi-do 13643 (KR); RYU, Dong Kyun, Seoul 05555 (KR)
(74) Representative: South, Nicholas Geoffrey
(86) International application number: PCT/KR2024/004820
(87) International publication number: WO 2024/215091

(57) **Abstract**

According to one embodiment, the provided resonant converter for an electric vehicle charger comprises: a first input side circuit including a first switching bridge, a first resonance tank and a first primary winding; a second input side circuit which is connected in parallel to the first input side circuit and which includes a second switching bridge, a second resonance tank and a second primary winding; a first output side circuit, which includes a first secondary winding for forming a first transformer together with the first primary winding, and a first rectified network; a second output side circuit which is connected in parallel to the first output side circuit, and which includes a second secondary winding for forming a second transformer together with the second primary winding, and a second rectified network; a switch for connecting the first secondary winding and the second secondary winding; and an output capacitor shared by the first output side circuit and the second output side circuit.

## Description

### [Technical Field]

The present disclosure relates to a resonant converter and an electric vehicle charger including the same.

### [Background Art]

Electric vehicles (EVs) are vehicles that use electric energy as a power source, and compared to conventional vehicles using internal combustion engines, they emit significantly less carbon, making them an important application for addressing issues such as environmental pollution and climate change. However, many challenges remain for the widespread adoption of EVs, the most pressing of which is securing charging infrastructure.

Existing electric vehicles are equipped with 400 V batteries and operate with a voltage fluctuation range of approximately 150 V to 500 V. However, recently, the use of 800 V batteries is increasing to meet the requirements for high-capacity charging and to reduce the weight of internal vehicle structures (e.g., bus bars). 800 V batteries operate with a voltage fluctuation range of approximately 300 V to 1,000 V. Accordingly, a power conversion circuit for electric vehicle charging that can provide charging power with high efficiency over a wide voltage range of about 150 V to 1,000 V may be required.

### [Disclosure]

### [Technical Problem]

Various embodiments provide a resonant converter with a wide range of output voltages and an electric vehicle charger including the same. The technical objects to be achieved by the present disclosure are not limited to the technical object described above, and other technical objects can be inferred from the following embodiments.

### [Technical Solution]

To achieve the aforementioned object, a resonant converter for an electric vehicle charger according to one aspect includes: a first input side circuit including a first switching bridge, a first resonant tank, and a first primary winding; a second input side circuit connected in parallel with the first input side circuit and including a second switching bridge, a second resonant tank, and a second primary winding; a first output side circuit including a first secondary winding forming a first transformer together with the first primary winding, and a first rectifier network; a second output side circuit connected in parallel with the first output side circuit and including a second secondary winding forming a second transformer together with the second primary winding, and a second rectifier network; a first switch configured to electrically connect the first secondary winding and the second secondary winding in series; and a first output capacitor shared by the first output side circuit and the second output side circuit.

A resonant converter for an electric vehicle charger according to another aspect includes: a first input side circuit including a first switching bridge and a first resonant tank; a second input side circuit connected in parallel with the first input side circuit and including a second switching bridge and a second resonant tank; a first output side circuit including a first rectifier network; a second output side circuit connected in parallel with the first output side circuit and including a second rectifier network; and a transformer network electrically and/or magnetically coupling the first input side circuit, the second input side circuit, the first output side circuit, and the second output side circuit, wherein the transformer network includes: a first transformer having a primary side connected to the first input side circuit and the second input side circuit, and a secondary side connected to the first output side circuit; and a second transformer having a primary side connected to the first input side circuit and the second input side circuit, and a secondary side connected to the second output side circuit, wherein the resonant converter further comprises a switch configured to electrically connect the secondary side of the first transformer and the secondary side of the second transformer in series.

An electric vehicle charger according to another aspect includes: an AC-DC converter configured to convert AC power received from an external power source into DC power; an electric reservoir configured to store the DC power received from the AC-DC converter; a DC-DC converter configured to convert the DC power received from the AC-DC converter or the electric reservoir into DC power having a different voltage level; and a controller configured to control the AC-DC converter, the electric reservoir, and the DC-DC converter, wherein the DC-DC converter includes: a first input side circuit including a first switching bridge, a first resonant tank, and a first primary winding; a second input side circuit connected in parallel with the first input side circuit and including a second switching bridge, a second resonant tank, and a second primary winding; a first output side circuit including a first secondary winding forming a first transformer together with the first primary winding, and a first rectifier network; a second output side circuit connected in parallel with the first output side circuit and including a second secondary winding forming a second transformer together with the second primary winding, and a second rectifier network; a switch configured to connect the first secondary winding and the second secondary winding; and an output capacitor shared by the first output side circuit and the second output side circuit.

### [Advantageous Effects]

The resonant converter and the electric vehicle charger including the same according to various embodiments of the present disclosure can provide a wide range of output voltages.

Furthermore, the resonant converter and the electric vehicle charger including the same according to various embodiments of the present disclosure can perform conversion between series connection and parallel connection of power conversion circuits using a single switch by disposing the switch between the secondary windings of the output side circuits. This reduces the space occupied by circuit configuration required for conversion between series connection and parallel connection within a power conversion system. Furthermore, reliability can be increased compared to a case using a plurality of switches.

In addition, the resonant converter and the electric vehicle charger including the same according to various embodiments of the present disclosure can employ structures and control methods for reducing the voltage/current stress of an equivalent transformer for transmitting the same output power, reducing the switching stress of bridge switches, or performing current balancing between power conversion circuits.

The effects of the embodiments are not limited to the effects described above, and effects not mentioned can be clearly understood by a person having ordinary skill in the art to which the embodiments belong from this specification and the attached drawings.

### [Description of Drawings]

FIG. 1 is a circuit diagram illustrating a resonant converter according to an embodiment.
FIG. 2 is a circuit diagram illustrating a resonant converter when a switch is open according to an embodiment.
FIG. 3a to FIG. 3c are diagrams showing simulation results of the resonant converter according to FIG. 2.
FIG. 4 is a circuit diagram illustrating a resonant converter when a switch is closed according to an embodiment.
FIG. 5a to FIG. 5c are diagrams showing simulation results of the resonant converter according to FIG. 4.
FIG. 6 is a circuit diagram illustrating a resonant converter according to another embodiment.
FIG. 7 to FIG. 9b are circuit diagrams illustrating resonant converters according to other embodiments.
FIG. 10 is a block diagram of an electric vehicle charger according to an embodiment.

### [Best mode for carrying out the Invention]

A resonant converter for an electric vehicle charger according to an embodiment may include: a first input side circuit including a first switching bridge, a first resonant tank, and a first primary winding; a second input side circuit connected in parallel with the first input side circuit and including a second switching bridge, a second resonant tank, and a second primary winding; a first output side circuit including a first secondary winding forming a first transformer together with the first primary winding, and a first rectifier network; a second output side circuit connected in parallel with the first output side circuit and including a second secondary winding forming a second transformer together with the second primary winding, and a second rectifier network; a first switch configured to electrically connect the first secondary winding and the second secondary winding in series; and a first output capacitor shared by the first output side circuit and the second output side circuit.

The first input side circuit and the first output side circuit may constitute a first power conversion circuit, and the second input side circuit and the second output side circuit may constitute a second power conversion circuit, wherein when the first switch is open, the first transformer and the second transformer may be connected in parallel, and a DC output voltage according to independent operations of the first power conversion circuit and the second power conversion circuit may be applied to the first output capacitor.

In an embodiment, the first power conversion circuit and the second power conversion circuit may operate in an interleaved manner to reduce current ripple.

When the first switch is closed, the first transformer and the second transformer may be connected in series, and a sum of an output voltage of the first output side circuit and an output voltage of the second output side circuit may be applied to the first output capacitor.

The first switching bridge and the second switching bridge may each include a plurality of bridge switches controlled by at least one switching signal and may generate a square wave output from a direct current input voltage.

The first resonant tank and the second resonant tank may be respectively coupled to the first switching bridge and the second switching bridge, and the first resonant tank and the second resonant tank may each include a resonant inductor and a resonant capacitor connected in series.

The first transformer and the second transformer may each change the strength of an alternating current voltage in proportion to the turns ratio between the primary winding and the secondary winding.

The first rectifier network and the second rectifier network may each include a plurality of bridge diodes for converting an alternating current input into a direct current output.

In an embodiment, the first switch may be a single switching element.

For example, the first switch may include at least one of a metal-oxide-semiconductor field-effect transistor (MOSFET), a bipolar junction transistor (BJT), a gate turn-off thyristor (GTO), an integrated gate commutated thyristor (IGCT), an isolated gate bipolar transistor (IGBT), or a relay.

The resonant converter may further include: a third input side circuit including a third switching bridge, a third resonant tank, and a third primary winding; a fourth input side circuit connected in parallel with the third input side circuit and including a fourth switching bridge, a fourth resonant tank, and a fourth primary winding; a third output side circuit including a third secondary winding forming a third transformer together with the third primary winding, and a third rectifier network; a fourth output side circuit connected in parallel with the third output side circuit and including a fourth secondary winding forming a fourth transformer together with the fourth primary winding, and a fourth rectifier network; a second switch configured to electrically connect the third secondary winding and the fourth secondary winding in series; and a second output capacitor shared by the third output side circuit and the fourth output side circuit.

The third input side circuit and the third output side circuit may constitute a third power conversion circuit, and the fourth input side circuit and the fourth output side circuit may constitute a fourth power conversion circuit, wherein when the second switch is open, the third transformer and the fourth transformer may be connected in parallel, and a DC output voltage according to independent operations of the third power conversion circuit and the fourth power conversion circuit may be applied to the second output capacitor.

In addition, when the second switch is closed, the third transformer and the fourth transformer may be connected in series, and a sum of an output voltage of the third output side circuit and an output voltage of the fourth output side circuit may be applied to the second output capacitor.

In an embodiment, the first input side circuit and the second input side circuit may be connected in parallel with the third input side circuit and the fourth input side circuit, and the first output side circuit and the second output side circuit may be connected in parallel with the third output side circuit and the fourth output side circuit.

In another embodiment, the first input side circuit and the second input side circuit may be connected in series with the third input side circuit and the fourth input side circuit, and the first output side circuit and the second output side circuit may be connected in parallel with the third output side circuit and the fourth output side circuit.

According to another embodiment, a resonant converter for an electric vehicle charger includes: a first input side circuit including a first switching bridge and a first resonant tank; a second input side circuit connected in parallel with the first input side circuit and including a second switching bridge and a second resonant tank; a first output side circuit including a first rectifier network; a second output side circuit connected in parallel with the first output side circuit and including a second rectifier network; and a transformer network electrically and/or magnetically coupling the first input side circuit, the second input side circuit, the first output side circuit, and the second output side circuit, wherein the transformer network includes a first transformer having a primary side connected to the first input side circuit and the second input side circuit, and a secondary side connected to the first output side circuit, and a second transformer having a primary side connected to the first input side circuit and the second input side circuit, and a secondary side connected to the second output side circuit, wherein the resonant converter may further include a switch configured to electrically connect the secondary side of the first transformer and the secondary side of the second transformer in series.

According to another embodiment, an electric vehicle charger includes: an AC-DC converter for converting AC power received from an external power source into DC power; an electric reservoir for storing the DC power received from the AC-DC converter; a DC-DC converter for converting the DC power received from the AC-DC converter or the electric reservoir into DC power having a different voltage level; and a controller for controlling the AC-DC converter, the electric reservoir, and the DC-DC converter, wherein the DC-DC converter includes: a first input side circuit including a first switching bridge, a first resonant tank, and a first primary winding; a second input side circuit connected in parallel with the first input side circuit and including a second switching bridge, a second resonant tank, and a second primary winding; a first output side circuit including a first secondary winding forming a first transformer together with the first primary winding, and a first rectifier network; a second output side circuit connected in parallel with the first output side circuit and including a second secondary winding forming a second transformer together with the second primary winding, and a second rectifier network; a switch connecting the first secondary winding and the second secondary winding; and an output capacitor shared by the first output side circuit and the second output side circuit.

The first input side circuit and the first output side circuit may constitute a first power conversion circuit, and the second input side circuit and the second output side circuit may constitute a second power conversion circuit, wherein, when the switch is open, the first transformer and the second transformer may be connected in parallel, and the DC-DC converter may output a DC output voltage according to independent operations of the first power conversion circuit and the second power conversion circuit.

In an embodiment, the first power conversion circuit and the second power conversion circuit may operate in an interleaved manner to reduce current ripple.

When the switch is closed, the first transformer and the second transformer may be connected in series, and a sum of an output voltage of the first output side circuit and an output voltage of the second output side circuit may be applied to the output capacitor.

### [Mode for Invention]

The terms used in the embodiments are generally and widely used, taking into account the functions in the present disclosure. However, these terms may vary depending on the intentions of those skilled in the art, precedents, the emergence of new technologies, etc. Furthermore, in certain cases, terms may be arbitrarily selected by the applicant, in which case their meanings will be described in detail in the relevant description of the disclosure. Therefore, the terms used in the present disclosure should be defined not simply based on their names, but based on their meaning and the overall context of the present disclosure.

When a part throughout the specification is said to "include" a component, unless otherwise specifically stated, this does not exclude other components but rather implies the inclusion of other components. Furthermore, terms such as "-unit" and "-module" described in the specification refer to a unit that processes at least one function or operation, which may be implemented in hardware, software, or a combination of hardware and software.

As used herein, when expressions such as "at least one" precede an array of components, they modify the entire array of components, not each individual component. For example, the expression "at least one of a, b, and c" should be interpreted to include a, b, c, a and b, a and c, b and c, or a, b and c.

Hereinafter, embodiments of the present disclosure will be described in detail with reference to the attached drawings such that those skilled in the art can easily practice the same. The present disclosure may be implemented in the aerosol generating device in the various embodiments described above, or may be implemented in various different forms, and is not limited to the embodiments described herein.

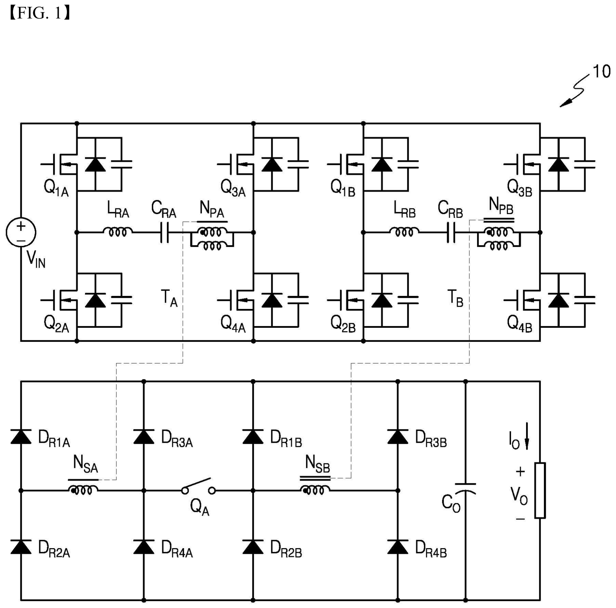

FIG. 1 is a circuit diagram illustrating a resonant converter according to an embodiment.

Referring to FIG. 1, a resonant converter 10 for an electric vehicle charger is illustrated. The resonant converter 10 may refer to a device that converts power using a resonant circuit. The resonant converter 10 may be a DC-DC converter that converts input DC power into DC power having a different voltage level and outputs the same. The resonant converter 10 may be employed in an electric vehicle charger, and more specifically, may be disposed within a power module for an electric vehicle charger. In addition to the resonant converter 10, the power module may further include a controller for controlling the resonant converter 10, a cooler for cooling the resonant converter 10, a socket including terminals for electrically connecting the resonant converter 10 to an external device, and at least one other type of converter.

The resonant converter 10 may include a first input side circuit including a first switching bridge, a first resonant tank, and a first primary winding N_{PA}. In an embodiment, the first switching bridge may include a plurality of bridge switches Q_{1A}, Q_{2A}, Q_{3A}, and Q_{4A} controlled by at least one switching signal. The first switching bridge may generate a square wave output from a direct current input voltage V_{IN}. The square wave output may be delivered to the first resonant tank and the first primary winding N_{PA}.

The first resonant tank may be coupled to the first switching bridge and include a resonant inductor L_{RA} and a resonant capacitor C_{RA} connected in series. However, the present disclosure is not necessarily limited thereto, and the first resonant tank may include a combination of at least one resonant inductor and at least one resonant capacitor connected in series or parallel.

The resonant converter 10 may include a second input side circuit connected in parallel with the first input side circuit and including a second switching bridge, a second resonant tank, and a second primary winding N_{PB}. In an embodiment, the second switching bridge may include a plurality of bridge switches Q_{1B}, Q_{2B}, Q_{3B}, and Q_{4B} controlled by at least one switching signal. The second switching bridge may generate a square wave output from the direct current input voltage V_{IN}. The square wave output may be delivered to the second resonant tank and the second primary winding N_{PB}.

The second resonant tank may be coupled to the second switching bridge and include a resonant inductor L_{RB} and a resonant capacitor C_{RB} connected in series. However, the present disclosure is not necessarily limited thereto, and the second resonant tank may include a combination of at least one resonant inductor and at least one resonant capacitor connected in series or in parallel.

Although FIG. 1 illustrates the first switching bridge and the second switching bridge as full bridges each including four bridge switches, the present disclosure is not necessarily limited thereto. At least one of the first switching bridge or the second switching bridge may be a half bridge including two bridge switches. Furthermore, at least one of the first switching bridge or the second switching bridge may have a full bridge configuration, but may operate in the same manner as a half bridge through control using a switching signal.

The resonant converter 10 may include a first output side circuit including a first secondary winding N_{SA} that forms a first transformer T_{A} together with the first primary winding N_{PA}, and a first rectifier network. The first transformer T_{A} may change the strength of an AC voltage in proportion to the turns ratio between the first primary winding N_{PA} and the first secondary winding N_{SA}. The first input side circuit and the first output side circuit may constitute a first power conversion circuit. Since the first resonant tank includes the resonant inductor L_{RA} and the resonant capacitor C_{RA}, and the first transformer TA has a magnetizing inductance, the first power conversion circuit may correspond to an LLC converter. The first rectifier network may include a plurality of bridge diodes D_{R1A}, D_{R2A}, D_{R3A}, and D_{R4A} for converting an AC input into a DC output.

The resonant converter 10 may include a second output side circuit that is connected in parallel with the first output side circuit and includes a second secondary winding N_{SB} that forms a second transformer T_{B} together with the second primary winding N_{PB}, and a second rectifier network. The second transformer T_{B} may change the strength of an AC voltage in proportion to the turns ratio between the second primary winding N_{PB} and the second secondary winding N_{SB}. The second input side circuit and the second output side circuit may constitute a second power conversion circuit. Since the second resonant tank includes the resonant inductor L_{RB} and the resonant capacitor C_{RB}, and the second transformer T_{B} has a magnetizing inductance, the second power conversion circuit may correspond to an LLC converter. The second rectifier network may include a plurality of bridge diodes D_{R1B}, D_{R2B}, D_{R3B} and D_{R4B} for converting an AC input into a DC output.

The resonant converter 10 may include a switch Q_{A} configured to electrically connect the first secondary winding N_{SA} and the second secondary winding N_{SB} in series. For example, the switch Q_{A} may be disposed between the first secondary winding N_{SA} and the second secondary winding N_{SB} to selectively connect the first secondary winding N_{SA} and the second secondary winding N_{SB}. The switch Q_{A} may include at least one of a metal-oxide-semiconductor field-effect transistor (MOSFET), a bipolar junction transistor (BJT), a gate turn-off thyristor (GTO), an integrated gate commutated thyristor (IGCT), an isolated gate bipolar transistor (IGBT), or a relay. However, the present disclosure is not limited thereto, and the switch Q_{A} may be another type of switch, including a bidirectional switch.

The resonant converter 10 may include an output capacitor Co shared by the first output side circuit and the second output side circuit. Whether the first transformer T_{A} and the second transformer T_{B} are connected in series or in parallel may be determined based on whether the switch Q_{A} is opened or closed. The range of output voltage applied to the output capacitor Co when the first transformer T_{A} and the second transformer T_{B} are connected in series may differ from the range of output voltage applied to the output capacitor Co when the first transformer T_{A} and the second transformer T_{B} are connected in parallel.

When the first transformer T_{A} and the second transformer T_{B} are connected in series, the sum of the output voltages of the first output side circuit and the second output side circuit is applied to the output capacitor Co. Therefore, an output voltage with a voltage fluctuation range twice that of a single power conversion circuit (e.g., a single LLC converter) can be provided. When a relatively low output voltage is required, the switch Q_{A} can be opened, and when a relatively high output voltage is required, the switch Q_{A} can be closed. In this manner, the resonant converter 10 according to the present disclosure can provide a wide range of output voltages. The resonant converter 10 may further include a control circuit for determining whether the switch Q_{A} is opened or closed.

Meanwhile, the switch Q_{A} may be a single switching element. In this manner, the resonant converter 10 according to the present disclosure can perform conversion between series connection and parallel connection of power conversion circuits using only a single switch Q_{A}. Accordingly, the space occupied by the circuit configuration required for conversion between series connection and parallel connection within the power conversion system can be reduced. Furthermore, reliability can be increased compared to a case using a plurality of switches.

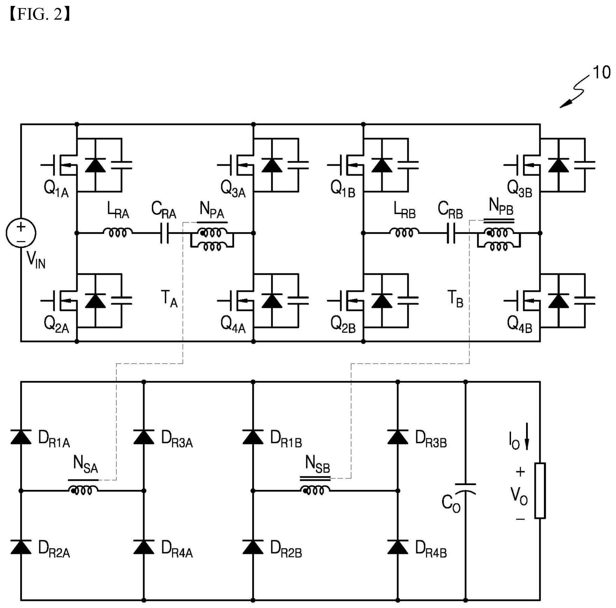

Hereinafter, the operation of the resonant converter 10 when the switch is open or closed will be described in detail with reference to FIG. 2 to FIG. 5c.

FIG. 2 is a circuit diagram for describing the resonant converter when the switch is open according to an embodiment.

Referring to FIG. 2, the resonant converter 10 when the switch Q_{A} is open is illustrated. When the switch Q_{A} is open, the first transformer T_{A} and the second transformer T_{B} are connected in parallel (via the first and second rectifier networks), and the resonant converter 10 can output a DC output voltage through the independent operations of the first and second power conversion circuits.

When the first transformer T_{A} and the second transformer T_{B} are connected in parallel, the resonant converter 10 provides a lower output voltage than when the first transformer T_{A} and the second transformer T_{B} are connected in series, but can instead provide a greater current.

In an embodiment, the first power conversion circuit and the second power conversion circuit may operate in an interleaved manner to reduce current ripple. However, the present disclosure is not necessarily limited thereto. The first power conversion circuit and the second power conversion circuit may operate in synchronization with the same timing by using the same switching signals.

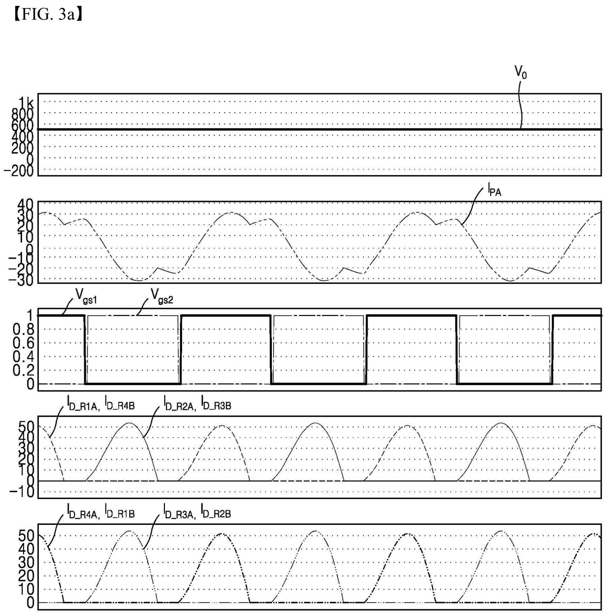

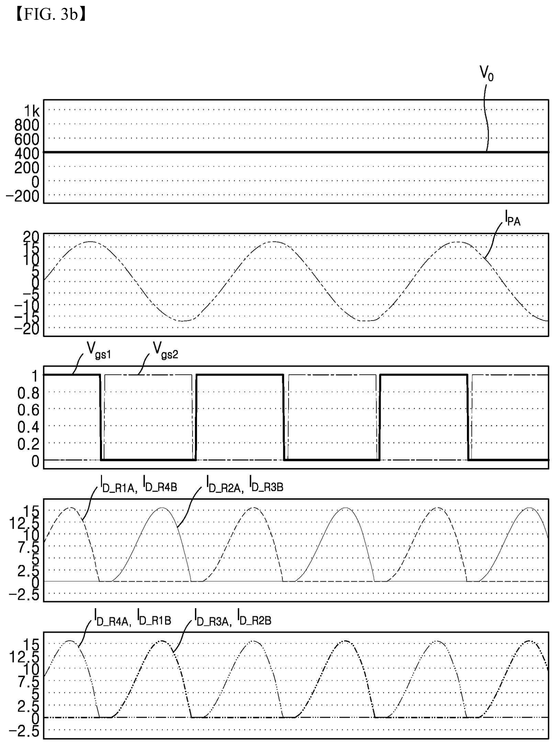

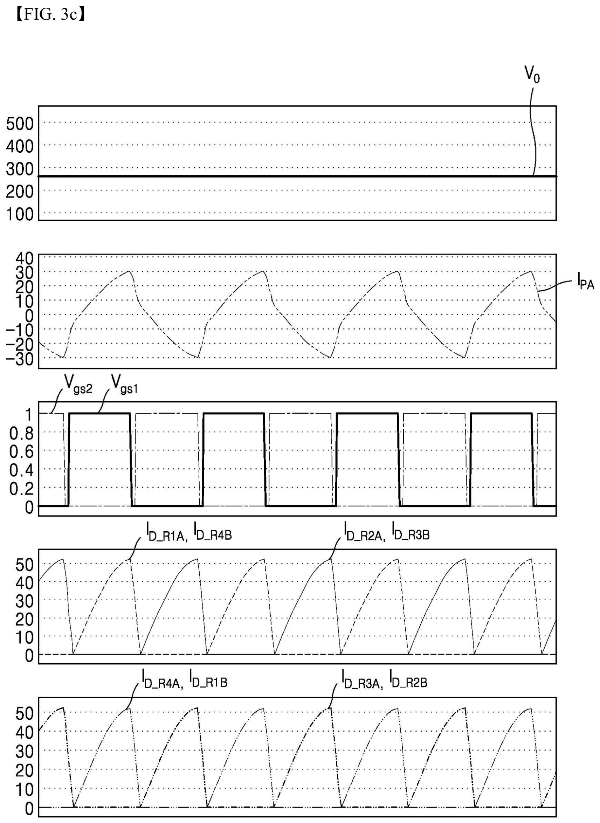

FIG. 3a to FIG. 3c are diagrams showing simulation results of the resonant converter according to FIG. 2.

Referring to FIG. 3a to FIG. 3c, simulation results corresponding to cases where the output voltage of the resonant converter 10 is 500 V, 400 V, and 260 V are illustrated, respectively. For example, FIG. 3a to FIG. 3c illustrate the output voltage Vo of the resonant converter 10, the primary side resonant current I_{PA} flowing through the first primary winding N_{PA}, switching signals V_{gs1} and V_{gs2} for controlling the first and second switching bridges, and currents I_{D_R1A}, I_{D_R2A}, I_{D_R3A}, I_{D_R4A}, I_{D_R1B}, I_{D_R2B}, I_{D_R3B}, and I_{D_R4B} flowing through the bridge diodes included in the first and second rectifier networks.

Here, the switching signal V_{gs1} may be applied to the bridge switches Q_{1A} and Q_{4A} included in the first switching bridge, and the switching signal V_{gs2} may be applied to the bridge switches Q_{2A} and Q_{3A} included in the first switching bridge. Additionally, the switching signal V_{gs1} may be applied to the bridge switches Q_{1B} and Q_{4B} included in the second switching bridge, and the switching signal V_{gs2} may be applied to the bridge switches Q_{2B} and Q_{3B} included in the second switching bridge.

Referring to the examples of FIG. 3a to FIG. 3c, when the switch Q_{A} is open, it can be ascertained that the DC output voltage of the resonant converter 10 can be provided in a range of at least about 260 V to 500 V by the independent operations of the first power conversion circuit and the second power conversion circuit. The output voltage of the resonant converter 10 can be changed according to the frequency or duty cycle of the switching signals V_{gs1} and V_{gs2}, but the range of the output voltage that allows efficient power supply is inevitably limited. Therefore, in order to provide the output voltage of the resonant converter 10 in a wider range, an additional method beyond control based on the frequency or duty cycle of the switching signals V_{gs1} and V_{gs2} may be required.

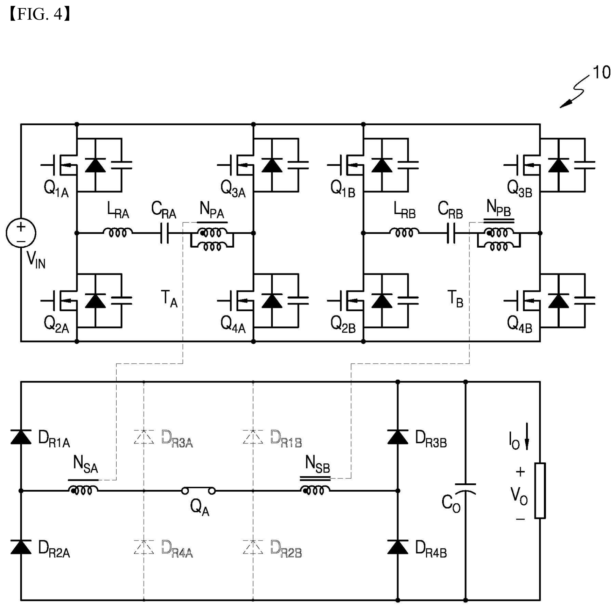

FIG. 4 is a circuit diagram illustrating the resonant converter when the switch is closed according to an embodiment.

Referring to Fig. 4, the resonant converter 10 when the switch Q_{A} is closed is illustrated. When the switch Q_{A} is closed, the first transformer T_{A} and the second transformer T_{B} are connected in series, and the sum of the output voltages of the first output side circuit and the second output side circuit can be applied to the output capacitor Co.

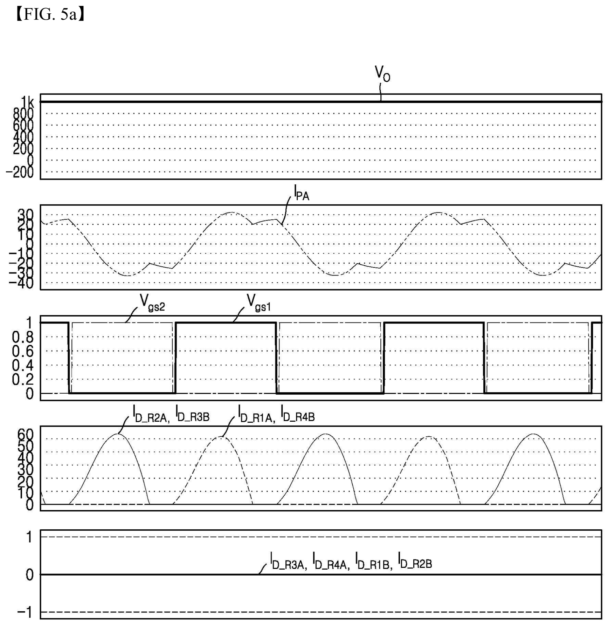

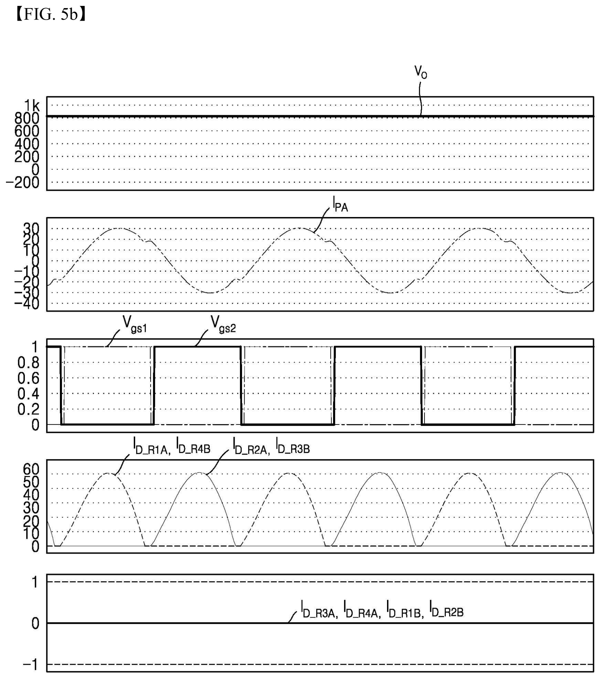

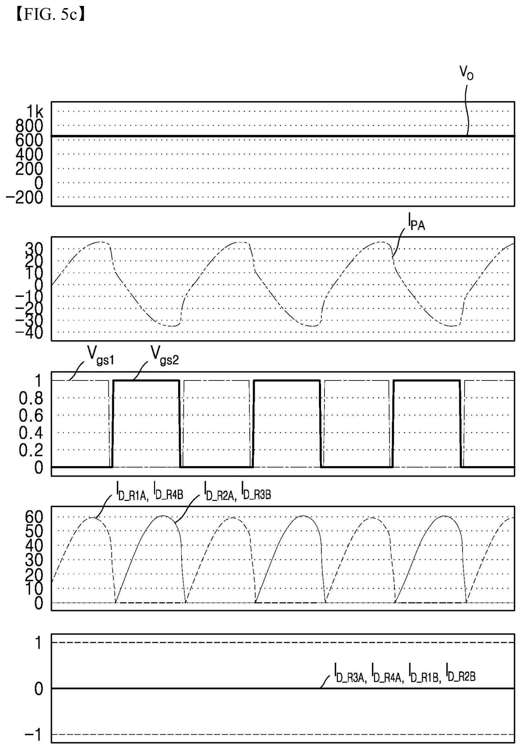

FIG. 5a to FIG. 5c are diagrams showing simulation results of the resonant converter according to FIG. 4.

Referring to FIG. 5a to FIG. 5c, simulation results corresponding cases where the output voltage of the resonant converter 10 is 1,000 V, 800 V, and 600 V are illustrated, respectively. For example, FIG. 5a to FIG. 5c illustrate the output voltage Vo of the resonant converter 10, the primary side resonant current I_{PA} flowing through the first primary winding N_{PA}, switching signals V_{gs1} and V_{gs2} for controlling the first and second switching bridges, and currents I_{D_R1A}, I_{D_R2A}, I_{D_R3A}, I_{D_R4A}, I_{D_R1B}, I_{D_R2B}, I_{D_R3B}, and I_{D_R4B} flowing through the bridge diodes included in the first and second rectifier networks.

Here, the switching signal V_{gs1} may be applied to the bridge switches Q_{1A} and Q_{4A} included in the first switching bridge, and the switching signal V_{gs2} may be applied to the bridge switches Q_{2A} and Q_{3A} included in the first switching bridge. In addition, the switching signal V_{gs1} may be applied to the bridge switches Q_{1B} and Q_{4B} included in the second switching bridge, and the switching signal V_{gs2} may be applied to the bridge switches Q_{2B} and Q_{3B} included in the second switching bridge.

When the switch Q_{A} is closed, diodes D_{R3A}, D_{R4A}, D_{R1B}, and D_{R2B} directly connected to the switch Q_{A} do not operate and are opened. Accordingly, the output voltage is divided and applied to the first secondary winding N_{SA} and the second secondary winding N_{SB}, and the resonant converter 10 can withstand a high output voltage.

Referring to the examples of FIG. 5a to FIG. 5c, it can be ascertained that when the switch Q_{A} is closed, the DC output voltage of the resonant converter 10 can be provided in a range of at least about 600 V to 1,000 V according to coupling of the first power conversion circuit and the second power conversion circuit. In other words, it can be ascertained that the resonant converter 10 according to the present disclosure can efficiently provide twice the output voltage by operating with the switch Q_{A} closed when a high output voltage is required.

Meanwhile, the numerical values, such as the output voltage, illustrated in FIG. 3a to FIG. 3c and FIG. 5a to FIG. 5c are merely examples and are not intended to limit the various embodiments according to the present disclosure. Those skilled in the art will readily understand that numerical values, such as the output voltage, may vary as the parameters of the circuit elements constituting the resonant converter 10 change.

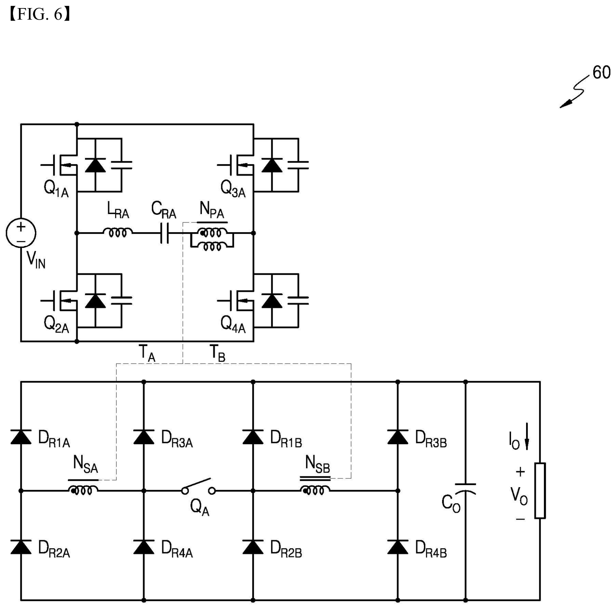

FIG. 6 is a circuit diagram illustrating a resonant converter according to another embodiment.

Referring to FIG. 6, a resonant converter 60 according to an embodiment different from FIG. 1 is illustrated.

The resonant converter 60 may include an input side circuit including a switching bridge, a resonant tank, and a primary winding. In an embodiment, the switching bridge may include a plurality of bridge switches Q_{1A}, Q_{2A}, Q_{3A}, and Q_{4A} controlled by at least one switching signal. The switching bridge may generate a square wave output from a direct current input voltage V_{IN}. The square wave output may be delivered to the resonant tank and the primary winding N_{PA}. The resonant tank may be coupled to the switching bridge and include a resonant inductor L_{RA} and a resonant capacitor C_{RA} connected in series. However, the present disclosure is not necessarily limited thereto, and the resonant tank may include a combination of at least one resonant inductor and at least one resonant capacitor connected in series or in parallel.

Although FIG. 6 illustrates the switching bridge as a full bridge including four bridge switches, the present disclosure is not necessarily limited thereto. The switching bridge may also be a half bridge including two bridge switches. Furthermore, the switching bridge may have a full bridge but operate in the same manner as a half bridge through control using a switching signal.

The resonant converter 60 may include a first output side circuit including a first secondary winding N_{SA} that forms a first transformer T_{A} together with the primary winding N_{PA}, and a first rectifier network. The first transformer T_{A} may change the strength of an AC voltage in proportion to the turns ratio between the primary winding N_{PA} and the first secondary winding N_{SA}. The first rectifier network may include a plurality of bridge diodes D_{R1A}, D_{R2A}, D_{R3A}, and D_{R4A} for converting an AC input into a DC output.

In addition, the resonant converter 60 may further include a second output side circuit connected in parallel with the first output side circuit and including a second secondary winding N_{SB} that forms a second transformer T_{B} together with the primary winding N_{PA}, and a second rectifier network. The second transformer T_{B} may change the strength of the AC voltage in proportion to the turns ratio between the primary winding N_{PA} and the second secondary winding N_{SB}. The second rectifier network may include a plurality of bridge diodes D_{R1B}, D_{R2B}, D_{R3B}, and D_{R4B} for converting an AC input into a DC output.

The resonant converter 60 may include a switch Q_{A} connecting the first secondary winding N_{SA} and the second secondary winding N_{SB}. Furthermore, the resonant converter 60 may include an output capacitor Co shared by the first output side circuit and the second output side circuit.

The resonant converter 60 shown in FIG. 6 differs from the resonant converter 10 shown in FIG. 1 only in that a single input side circuit is employed instead of two input side circuits connected in parallel. Therefore, redundant descriptions may be omitted. In the resonant converter 60 shown in FIG. 6, whether the first transformer T_{A} and the second transformer T_{B} are connected in series or in parallel may be determined based on whether the switch Q_{A} is open or closed. Furthermore, the resonant converter 60 may provide a wide range of output voltages by controlling whether the switch Q_{A} is open or closed.

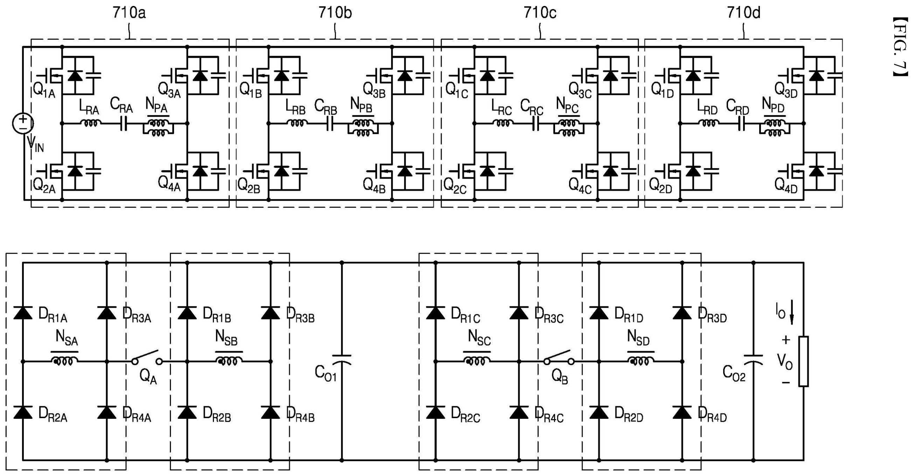

FIG. 7 to FIG. 9b are circuit diagrams illustrating resonant converters according to other embodiments.

Referring to FIG. 7, a resonant converter 70 according to another embodiment may further include a third input side circuit 710c, a fourth input side circuit 710d, a third output side circuit 720c, and a fourth output side circuit 720d, compared to the resonant converter 10 shown in FIG. 1. The third input side circuit 710c and the fourth input side circuit 710d may have substantially the same structures as those of the first input side circuit 710a and the second input side circuit 710b, and the third output side circuit 720c and the fourth output side circuit 720d may have substantially the same structures as those of the first output side circuit 720a and the second output side circuit 720b.

A first output capacitor C_{O1} may be shared by the first output side circuit 720a and the second output side circuit 720b, and a second output capacitor C_{O2} may be shared by the third output side circuit 720c and the fourth output side circuit 720d.

The third input side circuit 710c may include a third switching bridge, a third resonant tank, and a third primary winding N_{PC}. In an embodiment, the third switching bridge may include a plurality of bridge switches Q_{1C}, Q_{2C}, Q_{3C}, and Q_{4C} controlled by at least one switching signal. The third switching bridge may generate a square wave output from a DC input voltage V_{IN}. The square wave output may be delivered to the third resonant tank and the third primary winding N_{PC}.

The third resonant tank may be coupled to the third switching bridge and include a resonant inductor L_{RC} and a resonant capacitor C_{RC} connected in series. However, the present disclosure is not necessarily limited thereto, and the third resonant tank may include a combination of at least one resonant inductor and at least one resonant capacitor connected in series or in parallel.

The fourth input side circuit 710d may be connected in parallel with the third input side circuit 710c and may include a fourth switching bridge, a fourth resonant tank, and a fourth primary winding N_{PD}. In an embodiment, the fourth switching bridge may include a plurality of bridge switches Q_{1D}, Q_{2D}, Q_{3D}, and Q_{4D} controlled by at least one switching signal. The fourth switching bridge may generate a square wave output from the DC input voltage V_{IN}. The square wave output may be delivered to the fourth resonant tank and the fourth primary winding N_{PD}.

The fourth resonant tank may be coupled to the fourth switching bridge and include a resonant inductor L_{RD} and a resonant capacitor C_{RD} connected in series. However, the present disclosure is not necessarily limited thereto, and the fourth resonant tank may include a combination of at least one resonant inductor and at least one resonant capacitor connected in series or in parallel.

Although FIG. 7 illustrates the third switching bridge and the fourth switching bridge as full bridges each including four bridge switches, the present disclosure is not necessarily limited thereto. At least one of the third switching bridge or the fourth switching bridge may be a half bridge including two bridge switches. Furthermore, at least one of the third switching bridge or the fourth switching bridge may be a full bridge, but may operate in the same manner as a half bridge through control using a switching signal.

The third output side circuit 720c may include a third secondary winding N_{SC} that forms a third transformer together with the third primary winding N_{PC}, and a third rectifier network. The third transformer may change the strength of an AC voltage in proportion to the turns ratio between the third primary winding N_{PC} and the third secondary winding N_{SC}. The third input side circuit 710c and the third output side circuit 720c may constitute a third power conversion circuit. Since the third resonant tank includes a resonant inductor L_{RC} and a resonant capacitor C_{RC}, and the third transformer has a magnetizing inductance, the third power conversion circuit may correspond to an LLC converter. The third rectifier network may include a plurality of bridge diodes D_{R1C}, D_{R2C}, D_{R3C}, and D_{R4C} for converting an AC input to a DC output.

The fourth output side circuit 720d may be connected in parallel with the third output side circuit 720c and may include a fourth secondary winding N_{PD} that forms a fourth transformer together with the fourth primary winding N_{PD}, and a fourth rectifier network. The fourth transformer may change the strength of an AC voltage in proportion to the turns ratio between the fourth primary winding N_{PD} and the fourth secondary winding N_{SD}. The fourth input side circuit 710d and the fourth output side circuit 720d may constitute a fourth power conversion circuit. Since the fourth resonant tank includes a resonant inductor L_{RD} and a resonant capacitor C_{RD}, and the fourth transformer has a magnetizing inductance, the fourth power conversion circuit may correspond to an LLC converter. The fourth rectifier network may include a plurality of bridge diodes D_{R1D}, D_{R2D}, D_{R3D}, and D_{R4D} for converting an AC input into a DC output.

The resonant converter 70 may include a second switch Q_{B} configured to electrically connect the third secondary winding N_{SC} and the fourth secondary winding N_{SD} in series. The second switch Q_{B} is substantially the same as the first switch Q_{A} described with reference to FIG. 1, and thus, a redundant description thereof will be omitted.

Depending on whether the second switch Q_{B} is open or closed, the third and fourth transformers may be connected in series or in parallel. When the third and fourth transformers are connected in series, the range of output voltage applied to the second output capacitor C_{O2} may differ from the range of output voltage applied to the second output capacitor C_{O2} when the third and fourth transformers are connected in parallel.

For example, when the second switch Q_{B} is open, the third and fourth transformers are connected in parallel, and a DC output voltage according to independent operations of the third and fourth power conversion circuits may be applied to the second output capacitor C_{O2}. Furthermore, when the second switch Q_{B} is closed, the third and fourth transformers are connected in series, and the sum of the output voltages of the third output side circuit 720c and the fourth output side circuit 720d may be applied to the second output capacitor C_{O2}.

Referring to FIG. 7, the first input side circuit 710a and the second input side circuit 710b may be connected in parallel with the third input side circuit 710c and the fourth input side circuit 710d, and the first output side circuit 720a and the second output side circuit 720b may be connected in parallel with the third output side circuit 720c and the fourth output side circuit 720d. In other words, the first input side circuit 710a, the second input side circuit 710b, the third input side circuit 710c, and the fourth input side circuit 710d may all be connected in parallel, and the first output side circuit 720a, the second output side circuit 720b, the third output side circuit 720c, and the fourth output side circuit 720d may all be connected in parallel.

When both the first switch Q_{A} and the second switch Q_{B} are open, the first transformer and the second transformer can be connected in parallel through the first and second rectifier networks, and the third transformer and the fourth transformer can be connected in parallel through the third and fourth rectifier networks. The output voltage of the resonant converter 70 when both the first switch Q_{A} and the second switch Q_{B} are open can be the same as the output voltage of the resonant converter 10 shown in FIG. 1 when the switch Q_{A} is open. However, compared to the resonant converter 10 shown in FIG. 1, the resonant converter 70 shown in FIG. 7 can significantly reduce the voltage/current stress of an equivalent transformer for delivering the same output power.

When both the first switch Q_{A} and the second switch Q_{B} are closed, the first transformer and the second transformer can be connected in series, and the third transformer and the fourth transformer can also be connected in series. Accordingly, the sum of the output voltage of the first output side circuit 720a and the output voltage of the second output side circuit 720b can be applied to the first output capacitor C_{O1}, and the sum of the output voltage of the third output side circuit 720c and the output voltage of the fourth output side circuit 720d can be applied to the second output capacitor C_{O2}. The output voltage of the resonant converter 70 when both the first switch Q_{A} and the second switch QB are closed may be twice the output voltage of the resonant converter 70 when both the first switch Q_{A} and the second switch Q_{B} are open.

The output voltage of the resonant converter 70 when both the first switch Q_{A} and the second switch Q_{B} are closed may be the same as the output voltage of the resonant converter 10 shown in FIG. 1 when the switch Q_{A} is closed. However, compared to the resonant converter 10 shown in FIG. 1, the resonant converter 70 shown in FIG. 7 can significantly reduce the voltage/current stress of the equivalent transformer for transmitting the same output power.

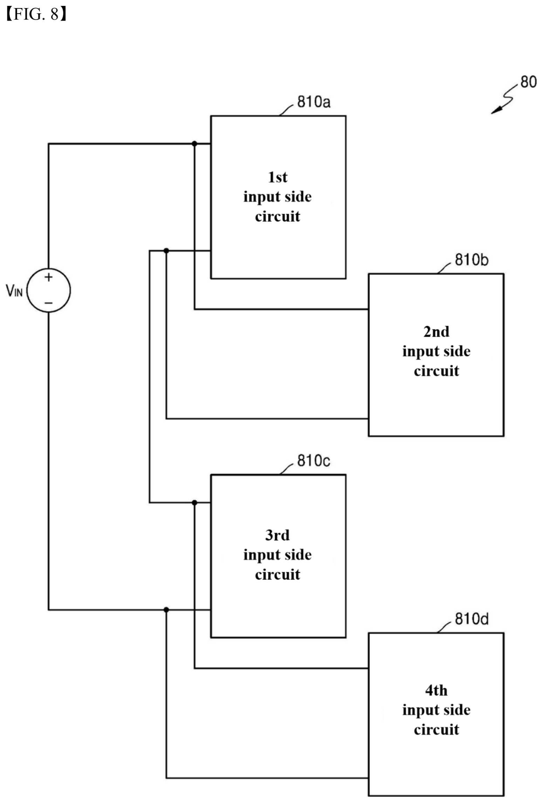

Referring to FIG. 8, a primary side circuit of a resonant converter 80 according to another embodiment is illustrated. Since the resonant converter 80 includes the same secondary side circuit as the resonant converter 70 shown in FIG. 7, only the primary side circuit is illustrated in FIG. 8 for convenience of description. In other words, the resonant converter 80 may include the first output side circuit 720a, the second output side circuit 720b, the third output side circuit 720c, and the fourth output side circuit 720d shown in FIG. 7 in the same manner.

Similarly to FIG. 7, the first output side circuit 720a may be magnetically coupled to the first input side circuit 810a through the first transformer, the second output side circuit 720b may be magnetically coupled to the second input side circuit 810b through the second transformer, the third output side circuit 720c may be magnetically coupled to the third input side circuit 810c through the third transformer, and the fourth output side circuit 720d may be magnetically coupled to the fourth input side circuit 810d through the fourth transformer. Additionally, the first output side circuit 720a and the second output side circuit 720b may be connected in parallel with the third output side circuit 720c and the fourth output side circuit 720d.

The first input side circuit 810a, the second input side circuit 810b, the third input side circuit 810c, and the fourth input side circuit 810d may have substantially the same structures as those of the first input side circuit 710a, the second input side circuit 710b, the third input side circuit 710c, and the fourth input side circuit 710d shown in FIG. 7.

The resonant converter 80 shown in FIG. 8 differs from the resonant converter 70 shown in FIG. 7 only in that the first input side circuit 810a and the second input side circuit 810b are connected in series with the third input side circuit 810c and the fourth input side circuit 810d. As the first input side circuit 810a and the second input side circuit 810b are connected in series with the third input side circuit 810c and the fourth input side circuit 810d, the input voltage applied to each of the first input side circuit 810a, the second input side circuit 810b, the third input side circuit 810c, and the fourth input side circuit 810d can be reduced by half. Accordingly, the switching stress of the bridge switches included in the primary side circuit of the resonant converter 80 can be reduced.

Meanwhile, the resonant converter 10 shown in FIG. 1 corresponds to a combination of two power conversion circuits (e.g., LLC converter), whereas the resonant converter 70 shown in FIG. 7 and the resonant converter 80 shown in FIG. 8 correspond to a combination of four power conversion circuits. For example, the primary side circuit of the resonant converter 70 shown in FIG. 7 may be referred to as a 4-parallel structure, and the primary side circuit of the resonant converter 80 shown in FIG. 8 may be referred to as a 2-parallel-2-series structure. In the present disclosure, only a combination of four power conversion circuits is described to avoid redundant explanation, but those skilled in the art will readily understand that the resonant converter according to the present disclosure may include a combination of more than four power conversion circuits, or may employ various combinations of series and/or parallel connections of the primary or secondary side circuit.

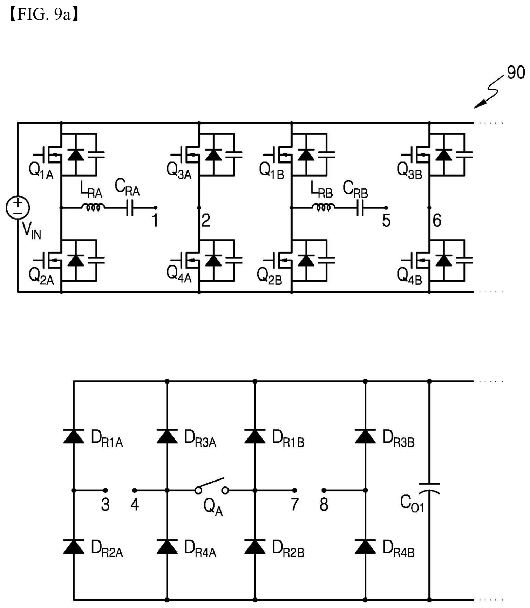

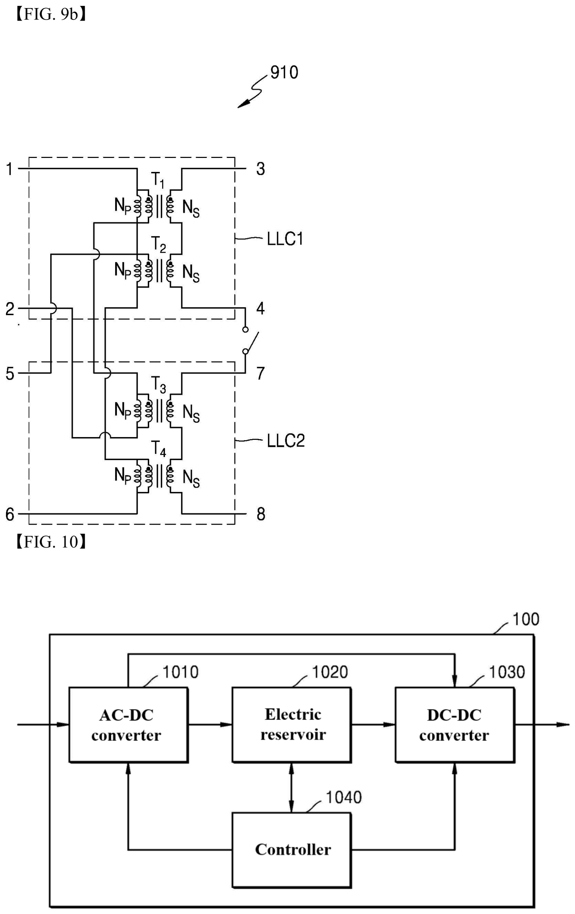

Referring to FIG. 9a and FIG. 9b, a resonant converter 90 according to another embodiment is illustrated.

The resonant converter 90 may include a first input side circuit including a first switching bridge and a first resonant tank. In an embodiment, the first switching bridge may include a plurality of bridge switches Q_{1A}, Q_{2A}, Q_{3A}, and Q_{4A} controlled by at least one switching signal. The first switching bridge may generate a square wave output from a DC input voltage V_{IN}.

The first resonant tank may be coupled to the first switching bridge and include a resonant inductor L_{RA} and a resonant capacitor C_{RA} connected in series. However, the present disclosure is not limited thereto, and the first resonant tank may include a combination of at least one resonant inductor and at least one resonant capacitor connected in series or in parallel.

The resonant converter 90 may include a second input side circuit connected in parallel with the first input side circuit and including a second switching bridge and a second resonant tank. In an embodiment, the second switching bridge may include a plurality of bridge switches Q_{1B}, Q_{2B}, Q_{3B}, and Q_{4B} controlled by at least one switching signal. The second switching bridge may generate a square wave output from the DC input voltage V_{IN}.

The second resonant tank may be connected to the second switching bridge and include a resonant inductor L_{RB} and a resonant capacitor C_{RB} connected in series. However, the present disclosure is not necessarily limited thereto, and the second resonant tank may include a combination of at least one resonant inductor and at least one resonant capacitor connected in series or in parallel.

Although FIG. 1 illustrates the first switching bridge and the second switching bridge as full bridges each including four bridge switches, the present disclosure is not necessarily limited thereto. At least one of the first switching bridge or the second switching bridge may be a half bridge including two bridge switches. Additionally, at least one of the first switching bridge or the second switching bridge may be a full bridge, but may operate in the same manner as a half bridge through control using a switching signal.

The resonant converter 90 may include a first output side circuit including a first rectifier network. The first rectifier network may include a plurality of bridge diodes D_{R1A}, D_{R2A}, D_{R3A}, and D_{R4A} for converting an AC input into a DC output. Furthermore, the resonant converter 90 may include a second output side circuit connected in parallel with the first output side circuit and including a second rectifier network. The second rectifier network may include a plurality of bridge diodes D_{R1B}, D_{R2B}, D_{R3B}, and D_{R4B} for converting an AC input into a DC output.

The resonant converter 90 may include a transformer network 910 that electrically and/or magnetically couples the first input side circuit, the second input side circuit, the first output side circuit, and the second output side circuit. The resonant converter 90 differs from the resonant converter 10 shown in FIG. 1 only in that it includes the transformer network 910 instead of the first transformer T_{A} and the second transformer T_{B}.

Referring to FIG. 9b, the transformer network 910 may include a first transformer LLC1 whose primary side is connected to the first input side circuit and the second input side circuit and whose secondary side is connected to the first output side circuit. Furthermore, the transformer network 910 may include a second transformer LLC2 whose primary side is connected to the first input side circuit and the second input side circuit and whose secondary side is connected to the second output side circuit.

The first transformer LLC1 may include a first equivalent transformer T₁ having a primary winding connected to the first input side circuit and a secondary winding connected to the first output side circuit, and a second equivalent transformer T₂ having a primary winding connected to the second input side circuit and a secondary winding connected to the first output side circuit. In other words, the first transformer LLC1 may include primary windings cross-connected between the first input side circuit and the second input side circuit on the primary side, and may include series-connected secondary windings magnetically coupled to the primary windings on the secondary side.

The second transformer LLC2 may include a third equivalent transformer T₃ having a primary winding connected to the first input side circuit and a secondary winding connected to the second output side circuit, and a fourth equivalent transformer T₄ having a primary winding connected to the second input side circuit and a secondary winding connected to the second output side circuit. In other words, the second transformer LLC2 may include primary windings cross-connected between the first input side circuit and the second input side circuit on the primary side, and may include series-connected secondary windings magnetically coupled to the primary windings on the secondary side.

The resonant converter 90 may further include a switch Q_{A} configured to electrically connect the secondary side of the first transformer LLC1 and the secondary side of the second transformer LLC2 in series, and an output capacitor C_{O1} shared by the first output side circuit and the second output side circuit. Depending on whether the switch Q_{A} is open or closed, the range of the output voltage applied to the output capacitor C_{O1} may vary. At this time, since the primary side configurations of the first transformer LLC1 and the second transformer LLC2 are interchanged, a wide range of output voltages can be provided, while automatically achieving current balancing between the two power conversion circuits.

FIG. 10 is a block diagram of an electric vehicle charger according to an embodiment.

Referring to FIG. 10, the electric vehicle charger 100 may include an AC-DC converter 1010, an electric reservoir 1020, a DC-DC converter 1030, and a controller 1040. However, the internal structure of the electric vehicle charger 100 is not limited to that illustrated in FIG. 10. Those skilled in the art will appreciate that, depending on the design of the electric vehicle charger 100, some of the hardware components illustrated in FIG. 10 may be omitted or new components may be added. For example, the electric vehicle charger 100 may further include a socket including terminals for electrically connecting an external device to the electric vehicle charger 100.

The electric vehicle charger 100 may refer to a rapid charger installed at an electric charging station, which is similar in concept to a gasoline gas station. In one example, the electric vehicle charger 100 can charge an electric vehicle battery by 80% or more within one hour, and the charging capacity of the electric vehicle charger 100 may be 30 kW or more. However, the present disclosure is not necessarily limited thereto.

The AC-DC converter 1010 may refer to a converter that converts AC power received from an external power source into DC power. For example, the AC-DC converter 1010 may convert AC power received from an external three-phase AC input power source into single-phase DC power. However, the present disclosure is not limited thereto. Instead of being directly connected to an external three-phase AC input power source, the AC-DC converter 1010 may be connected to the external three-phase AC input power source through a separate three-phase transformer, thereby receiving single-phase AC power and converting the same into DC power.

The electric reservoir 1020 may store DC power received from the AC-DC converter 1010. The electric reservoir 1020 may serve as a buffer during a process of transmitting power from the AC-DC converter 1010 to the DC-DC converter 1030. The electric reservoir 1020 may include, but is not limited to, one or more battery packs. In an embodiment, power may be transmitted directly from the AC-DC converter 1010 to the DC-DC converter 1030 without passing through the electric reservoir 1020.

The DC-DC converter 1030 may refer to a converter that converts input DC power into DC power with a different voltage and outputs the same. For example, the DC-DC converter 1030 may convert DC power received from the AC-DC converter 1010 or the electric reservoir 1020 into DC power with a different voltage. The DC-DC converter 1030 may be the resonant converter 10 shown in FIG. 1, the resonant converter 60 shown in FIG. 6, the resonant converter 70 shown in FIG. 7, the resonant converter 80 shown in FIG. 8, or the resonant converter 90 shown in FIG. 9.

The controller 1040 is hardware that controls the overall operation of the electric vehicle charger 100. For example, the controller 1040 can control the operations of the AC-DC converter 1010, the electric reservoir 1020, and the DC-DC converter 1030, as well as operations of other components included in the electric vehicle charger 100.

The controller 1040 includes at least one processor. The processor may be implemented as an array of multiple logic gates, or may be implemented as a combination of a general-purpose microprocessor and a memory storing a program executable on the microprocessor. Furthermore, those skilled in the art will appreciate that the processor may be implemented as other types of hardware.

In an embodiment, the DC-DC converter 1030 may include a first input side circuit including a first switching bridge, a first resonant tank, and a first primary winding. Furthermore, the DC-DC converter 1030 may include a second input side circuit connected in parallel with the first input side circuit and including a second switching bridge, a second resonant tank, and a second primary winding. The DC-DC converter 1030 may include a first output side circuit including a first secondary winding that forms a first transformer together with the first primary winding, and a first rectifier network. Additionally, the DC-DC converter 1030 may include a second output side circuit connected in parallel with the first output side circuit and including a second secondary winding that forms a second transformer together with the second primary winding, and a second rectifier network.

The DC-DC converter 1030 may include a switch connecting the first secondary winding and the second secondary winding, and an output capacitor shared by the first output side circuit and the second output side circuit. Here, the first input side circuit and the first output side circuit may constitute a first power conversion circuit, and the second input side circuit and the second output side circuit may constitute a second power conversion circuit.

When the switch is open, the first transformer and the second transformer are connected in parallel, and the DC-DC converter 1030 may output a DC output voltage through independent operations of the first power conversion circuit and the second power conversion circuit. In an embodiment, the first power conversion circuit and the second power conversion circuit may operate in an interleaved manner to reduce current ripple. However, the present disclosure is not necessarily limited thereto.

When the switch is closed, the first transformer and the second transformer are connected in series, and the sum of the output voltage of the first output side circuit and the output voltage of the second output side circuit may be applied to the output capacitor.

In this way, the electric vehicle charger 100 according to the present disclosure can provide a wide range of output voltages using the DC-DC converter 1030. By disposing a switch between the secondary windings of the output side circuits, the electric vehicle charger 100 can perform conversion between series connection and parallel connection of the power conversion circuits with a single switch. Accordingly, the space occupied by circuit configuration for conversion between series connection and parallel connection within the power conversion system can be reduced. Furthermore, reliability can be increased compared to a case where a plurality of switches is used.

In other embodiments, the DC-DC converter 1030 may be the resonant converter 70 shown in FIG. 7, the resonant converter 80 shown in FIG. 8, or the resonant converter 90 shown in FIG. 9, and may be used to reduce the voltage/current stress of an equivalent transformer for delivering the same output power, reduce the switching stress of bridge switches, or perform current balancing between the power conversion circuits.

The description of the above-described embodiments is merely illustrative, and those skilled in the art will appreciate that various modifications and equivalent alternative embodiments are possible. Therefore, the true scope of protection for the disclosure should be defined by the appended claims, and all differences within the scope equivalent to the claims should be construed as being included within the scope of protection defined by the claims.

## Claims

1. A resonant converter for an electric vehicle charger, comprising:
a first input side circuit including a first switching bridge, a first resonant tank, and a first primary winding;
a second input side circuit connected in parallel with the first input side circuit and including a second switching bridge, a second resonant tank, and a second primary winding;
a first output side circuit including a first secondary winding forming a first transformer together with the first primary winding, and a first rectifier network;
a second output side circuit connected in parallel with the first output side circuit and including a second secondary winding forming a second transformer together with the second primary winding, and a second rectifier network;
a first switch configured to electrically connect the first secondary winding and the second secondary winding in series; and
a first output capacitor shared by the first output side circuit and the second output side circuit.

2. The resonant converter of claim 1, wherein the first input side circuit and the first output side circuit constitute a first power conversion circuit, and the second input side circuit and the second output side circuit constitute a second power conversion circuit,
wherein, when the first switch is open, the first transformer and the second transformer are connected in parallel, and a direct current (DC) output voltage according to independent operations of the first power conversion circuit and the second power conversion circuit is applied to the first output capacitor.

3. The resonant converter of claim 2, wherein the first power conversion circuit and the second power conversion circuit operate in an interleaved manner to reduce current ripple.

4. The resonant converter of claim 1, wherein, when the first switch is closed, the first transformer and the second transformer are connected in series, and a sum of an output voltage of the first output side circuit and an output voltage of the second output side circuit is applied to the first output capacitor.

5. The resonant converter of claim 1, wherein each of the first switching bridge and the second switching includes a plurality of bridge switches controlled by at least one switching signal and generates a square wave output from a DC input voltage.

6. The resonant converter of claim 1, wherein the first resonant tank and the second resonant tank are respectively coupled to the first switching bridge and the second switching bridge, and each of the first resonant tank and the second resonant tank includes a resonant inductor and a resonant capacitor connected in series.

7. The resonant converter of claim 1, wherein the first transformer and the second transformer change a strength of an alternating current (AC) voltage in proportion to a turns ratio between a primary winding and a secondary winding.

8. The resonant converter of claim 1, wherein each of the first rectifier network and the second rectifier network includes a plurality of bridge diodes for converting an AC input into a DC output.

9. The resonant converter of claim 1, wherein the first switch is a single switching element.

10. The resonant converter of claim 1, wherein the first switch includes at least one of a metal-oxide-semiconductor field-effect transistor (MOSFET), a bipolar junction transistor (BJT), a gate turn-off thyristor (GTO), an integrated gate commutated thyristor (IGCT), an isolated gate bipolar transistor (IGBT), or a relay.

11. The resonant converter of claim 1, further comprising:
a third input side circuit including a third switching bridge, a third resonant tank, and a third primary winding;
a fourth input side circuit connected in parallel with the third input side circuit and including a fourth switching bridge, a fourth resonant tank, and a fourth primary winding;
a third output side circuit including a third secondary winding forming a third transformer together with the third primary winding, and a third rectifier network;
a fourth output side circuit connected in parallel with the third output side circuit and including a fourth secondary winding forming a fourth transformer together with the fourth primary winding, and a fourth rectifier network;
a second switch configured to electrically connect the third secondary winding and the fourth secondary winding in series; and
a second output capacitor shared by the third output side circuit and the fourth output side circuit.

12. The resonant converter of claim 11, wherein the third input side circuit and the third output side circuit constitute a third power conversion circuit, and the fourth input side circuit and the fourth output side circuit constitute a fourth power conversion circuit,
wherein, when the second switch is open, the third transformer and the fourth transformer are connected in parallel, and a DC output voltage according to independent operations of the third power conversion circuit and the fourth power conversion circuit is applied to the second output capacitor.

13. The resonant converter of claim 11, wherein, when the second switch is closed, the third transformer and the fourth transformer are connected in series, and a sum of an output voltage of the third output side circuit and an output voltage of the fourth output side circuit is applied to the second output capacitor.

14. The resonant converter of claim 11, wherein the first input side circuit and the second input side circuit are connected in parallel with the third input side circuit and the fourth input side circuit, and the first output side circuit and the second output side circuit are connected in parallel with the third output side circuit and the fourth output side circuit.

15. The resonant converter of claim 11, wherein the first input side circuit and the second input side circuit are connected in series with the third input side circuit and the fourth input side circuit, and the first output side circuit and the second output side circuit are connected in parallel with the third output side circuit and the fourth output side circuit.

16. A resonant converter for an electric vehicle charger, comprising:
a first input side circuit including a first switching bridge and a first resonant tank;
a second input side circuit connected in parallel with the first input side circuit and including a second switching bridge and a second resonant tank;
a first output side circuit including a first rectifier network;
a second output side circuit connected in parallel with the first output side circuit and including a second rectifier network; and
a transformer network electrically and/or magnetically coupling the first input side circuit, the second input side circuit, the first output side circuit, and the second output side circuit,
wherein the transformer network comprises:
a first transformer having a primary side connected to the first input side circuit and the second input side circuit, and a secondary side connected to the first output side circuit; and
a second transformer having a primary side connected to the first input side circuit and the second input side circuit, and a secondary side connected to the second output side circuit,
wherein the resonant converter further comprises a switch configured to electrically connect the secondary side of the first transformer and the secondary side of the second transformer in series.

17. An electric vehicle charger comprising:
an AC-DC converter configured to convert AC power received from an external power source into DC power;
an electric reservoir configured to store the DC power received from the AC-DC converter;
a DC-DC converter configured to convert the DC power received from the AC-DC converter or the electric reservoir into DC power having a different voltage level; and
a controller configured to control the AC-DC converter, the electric reservoir, and the DC-DC converter,
wherein the DC-DC converter comprises:
a first input side circuit including a first switching bridge, a first resonant tank, and a first primary winding;
a second input side circuit connected in parallel with the first input side circuit and including a second switching bridge, a second resonant tank, and a second primary winding;
a first output side circuit including a first secondary winding forming a first transformer together with the first primary winding, and a first rectifier network;
a second output side circuit connected in parallel with the first output side circuit and including a second secondary winding forming a second transformer together with the second primary winding, and a second rectifier network;
a switch configured to connect the first secondary winding and the second secondary winding; and
an output capacitor shared by the first output side circuit and the second output side circuit.

18. The resonant converter of claim 17, wherein the first input side circuit and the first output side circuit constitute a first power conversion circuit, and the second input side circuit and the second output side circuit constitute a second power conversion circuit,
wherein, when the switch is open, the first transformer and the second transformer are connected in parallel, and the DC-DC converter outputs a DC output voltage according to independent operations of the first power conversion circuit and the second power conversion circuit.

19. The resonant converter of claim 18, wherein the first power conversion circuit and the second power conversion circuit operate in an interleaved manner to reduce current ripple.

20. The resonant converter of claim 17, wherein, when the switch is closed, the first transformer and the second transformer are connected in series, and a sum of an output voltage of the first output side circuit and an output voltage of the second output side circuit is applied to the output capacitor.
